(19) Europäisches Patentamt
European Patent Office
Office européen des brevets

(11) Veröffentlichungsnummer: **0 431 466 A2**

# (12) EUROPÄISCHE PATENTANMELDUNG

(21) Anmeldenummer: **90122825.4**

(22) Anmeldetag: **29.11.90**

(51) Int. Cl.5: **C07F 7/21**, G02F 1/35

(30) Priorität: **05.12.89 DE 3940148**

(43) Veröffentlichungstag der Anmeldung:
**12.06.91 Patentblatt 91/24**

(84) Benannte Vertragsstaaten:
**BE CH DE FR GB LI NL**

(71) Anmelder: **Consortium für elektrochemische Industrie GmbH**
**Zielstattstrasse 20**
**W-8000 München 70(DE)**

(72) Erfinder: **Spes, Peter, Dr.**
**Frits-Meyer-Weg 55 C 4/7**
**W-8000 München 81(DE)**
Erfinder: **Hessling, Mechthild**
**Stieglitzweg 15**
**W-8011 Vaterstetten(DE)**
Erfinder: **Kreuzer, Franz-Heinrich, Dr.**
**Josef-Gerstner-Strasse 14 D**
**W-8033 Martinsried(DE)**

## (54) Cyclische Organosiloxane mit nichtlinearen optischen Eigenschaften.

(57) Cyclische Organosiloxane, dadurch gekennzeichnet, daß sie mindestens einen Si-gebundenen organischen Rest aufweisen, der mindestens ein Donor/Acceptor-π-Elektronensystem beinhaltet.

EP 0 431 466 A2

## CYCLISCHE ORGANOSILOXANE MIT NICHTLINEAREN OPTISCHEN EIGENSCHAFTEN

Die Erfindung betrifft cyclische Organosiloxane mit nichtlinearen optischen Eigenschaften, Verfahren zu deren Herstellung sowie deren Verwendung.

Die nichtlineare Optik umfaßt Wechselwirkungen elektromagnetischer Felder in verschiedenen Materialien, durch die neue Felder mit veränderter Phase, Frequenz, Amplitude oder anderen Ausbreitungscharakteristika entstehen. Auf dem Gebiet der Mikroelektronik (optische Schalter, integrierte Schaltkreise, Frequenzverdoppelung bzw. -verdreifachung) und der Kommunikationstechnik besteht großes Interesse, Materialien zu finden, in denen diese Effekte auftreten.

Während früher anorganische Kristalle, wie Lithiumniobat und Galiumarsenid, oder auch organische Kristalle, wie Harnstoff, Beachtung fanden, werden heute polymere Materialien mit einem donor/acceptorsubstituierten, delokalisierten $\pi$-Elektronensystem bevorzugt. Neben der leichteren Verarbeitbarkeit polymerer Materialien liegt ein wesentlicher Vorteil in der Möglichkeit, dünne, transparente Filme zu erhalten. In diesen Filmen sind Verbindungen mit Donor/Acceptorgruppen einer Polymermatrix zugemischt oder an ein Polymerrückgrad gebunden und können durch elektrische oder magnetische Felder ausgerichtet werden. Des weiteren kann es von Vorteil sein, wenn solche Polymere neben nichtlinearen optischen Eigenschaften auch flüssigkristalline Eigenschaften aufweisen. Hierzu sei beispielsweise auf EP 262 680 A (ausgegeben am 6. April 1988), US 4,810,338 A (ausgegeben am 7. März 1989), EP 271 730 A (ausgegeben am 22. Juni 1988), US 4,779,961 A (ausgegeben am 25. Januar 1988) und US 4,755,574 A (ausgegeben am 5. Juli 1988) der Hoechst Celanese Co. hingewiesen. In diesen Veröffentlichungen werden flüssigkristalline Polymere mit nichtlinearen optischen Eigenschaften beschrieben. Hochmolekulare Polymere lassen sich jedoch meist nur durch Anlegen eines starken elektrischen oder magnetischen Feldes orientieren.

Aufgabe der vorliegenden Erfindung war es daher, Verbindungen bereitzustellen, die nichtlineare optische Eigenschaften aufweisen und sich auf einfache Weise, auch ohne Anlegen elektrischer oder magnetischer Felder gut orientieren lassen. Eine weitere Aufgabe bestand darin, Verbindungen der oben genannten Art bereitzustellen, die zusätzlich flüssigkristalline Eigenschaften aufweisen. Diese Aufgaben werden durch die Erfindung gelöst.

Gegenstand der Erfindung sind cyclische Organosiloxane, dadurch gekennzeichnet, daß sie mindestens einen Si-gebundenen organischen Rest aufweisen, der mindestens ein Donor/Acceptor-$\pi$-Elektronensystem beinhaltet, Verfahren zu deren Herstellung sowie deren Verwendung.

Bei den erfindungsgemäßen cyclischen Organosiloxanen handelt es sich vorzugsweise um solche aus Einheiten der allgemeinen Formel

$$R_aR^1_bR^2_cSiO_{\frac{4-a-b-c}{2}} \qquad (I)$$

wobei

R gleich oder verschieden sein kann und einen chiralen oder achiralen, einwertigen organischen Rest, der mindestens ein Donor/Acceptor-$\pi$-Elektronensystem aufweist, bedeutet,

$R^1$ gleiche oder verschiedene, einwertige, gegebenenfalls substituierte Kohlenwasserstoffreste bedeutet,

$R^2$ gleich oder verschieden sein kann und einen mesogenen Rest bedeutet,

a 0,1 oder 2,

b 0,1 oder 2 und

c 0,1 oder 2 ist,

mit der Maßgabe, daß die Summe aus a, b und c gleich zwei ist und das cyclische Organosiloxan mindestens einen Rest R aufweist.

Bei den erfindungsgemäßen cyclischen Organosiloxanen handelt es sich vorzugsweise um solche mit 2 bis 10 Silicium-Ringatomen.

Vorzugsweise stellt R einen Rest der Formel

$$-C_dH_e-CR^3{}_2-C_dH_e-\overset{\overset{\displaystyle O}{\|}}{C}-Y \qquad (II)$$

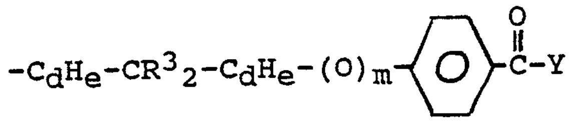 (III)

$$-C_dH_e-CR^3{}_2-C_dH_e-(O)_m-Y \qquad (IV)$$

oder

$$-C_dH_e-CR^3{}_2-C_dH_e-(O)_m-CH(\overset{\overset{\displaystyle O}{\|}}{C}-Y)_2 \qquad (V)$$

dar, wobei

- $R^3$ gleich oder verschieden sein kann und Wasserstoffatom, Cyanogruppe, Hydroxylgruppe, Halogenatom und Alkylgruppe mit 1 bis 4 Kohlenstoffatomen bedeutet,
- d jeweils gleiche oder verschiedene ganze Zahlen zwischen 0 und 12, bevorzugt zwischen 1 und 6, bedeutet,
- e jeweils gleiche oder verschiedene ganze Zahlen zwischen 0 und 24, bevorzugt zwischen 1 und 12, bedeutet,
- m 0 oder 1 ist und
- Y einen ein Donor/Acceptor-$\pi$-Elektronensystem enthaltenden, chiralen oder achiralen Rest bedeutet.

Vorzugsweise weist Rest Y ein Seitenketten/Achsverhältnis zwischen 2:1 und 20:1, besonders bevorzugt zwischen 2:1 und 10:1, insbesondere 10:1,5, auf, mit der Maßgabe, daß bei R gleich Rest gemäß Formel (III) die Phenylengruppe und bei R gleich Rest gemäß Formel (II) und (V) die CO-Gruppe mit in die Bestimmung des Seitenketten/Achsverhältnisses einbezogen wird.

Als Seitenketten/Achsverhältnis wird dabei das Verhältnis von Maximallänge zu Maximalbreite der entsprechenden Kristallstrukturen unter Berücksichtigung der Van-der-Waals-Radien bezeichnet, welches nach an sich bekannten Methoden bestimmt werden kann.

Vorzugsweise wird das Seitenketten/Achsverhältnis von Molekülen bzw. Molekülteilen durch Energieminimierung der entsprechenden Kristallstrukturen ohne komplette Konformationsanalyse, beispielsweise mit dem EDV-Programm "Discover" (Molekular Modeling System, Vers. 2.5, BIOSYM Technologies, San Diego), und anschließender Ermittlung der maximalen Länge sowie der maximalen Breite unter Einbeziehung der Van-der-Waals-Radien durch Drehung der Kristallstruktur im Achsenkreuz bestimmt. Die Kristallstrukturen sind dabei direkt erhältlich oder können aus Kristallfragmenten aufgebaut werden. So können Kristallstrukturen beispielsweise aus Kristallfragmenten der Cambridge Structural Database CSD (Cambridge Crystallographic Data Centre, University Chemical Laboratory, Lensfield Road, Cambridge CB 2 1 EW, U.K.) mit Hilfe des EDV-Programms "Insight" (Molekular Modeling System, Vers. 2.5, BIOSYM Technologies, San Diego) und gegebenenfalls durch Ergänzung durch Fragmente der Bibliothek (Residue library) dieses EDV-Programms aufgebaut werden.

Bei dem Rest $R^3$ handelt es sich bevorzugt um Wasserstoffatom, Hydroxylgruppe, Fluor-, Chlor- und Bromatom sowie um den Methyl- und Ethylrest, wobei Wasserstoffatom, Fluor, und Methylgruppe besonders bevorzugt sind.

Bevorzugte Reste Y sind Nitroanilinreste, Nitrostilbenreste und unsubstituierte sowie beispielsweise mit Alkylgruppen und/oder Halogenatomen substituierte Reste der allgemeinen Formeln

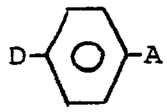

(VI)

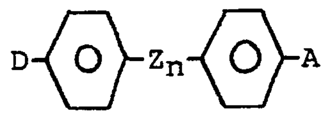

(VII)

und

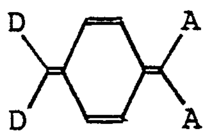

(VIII)

in denen

A gleich oder verschieden sein kann und elektronenziehender Rest, wie beispielsweise Nitro-, Cyano-, Dicyanovinyl-, Tricyanovinyl, Acyl-, Trifluormethyl- und Alkoxysulfonylgruppen, bedeutet,

D gleich oder verschieden sein kann und elektronenschiebender Rest, wie beispielsweise Halogenatom, Amino-, Hydroxy-, Mercapto-, Alkyl-, Alkoxy-, Alkylthio-, Acyloxy- und Vinylgruppen, bedeutet,

Z ein konjugiertes Mehrfachbindungssystem zwischen gleichen oder verschiedenen Atomen, wie beispielsweise -H = CH-, -CH≡CH-, -CH = N- und -N = N- bedeutet und n eine ganze Zahl zwischen 0 und 8, vorzugsweise zwischen 0 und 2, besonders bevorzugt 1, ist,

mit der Maßgabe, daß in den Resten Y der allgemeinen Formeln (VI) bis (VIII) ein Wasserstoffatom durch eine chemische Bindung ersetzt ist. Vorzugsweise ist Rest Y im Rest R über D, wobei R und D eine der obengenannten Bedeutungen haben, angebunden, insbesondere bei D gleich Amino- oder Hydroxylgruppe.

Bevorzugte Reste A sind Nitro-, Cyano- und Dicyanovinylgruppen.

Bevorzugte Reste D sind Amino-, Alkyl-, Alkoxy-, Alkylthio- sowie Acyloxygruppen, wobei Amino- und Alkoxygruppen besonders bevorzugt sind.

Die bevorzugte Bedeutung von Z ist -CH = CH-, -CH = N- und -N = N-.

Beispiele für Reste R sind

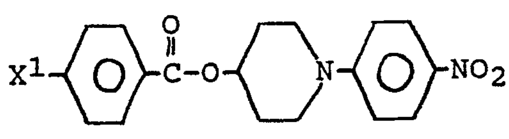

mit einem Seitenketten/Achsverhältnis von 2,8 : 1,

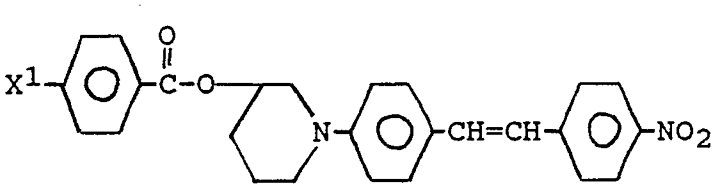

mit einem Seitenketten/Achsverhältnis von 2,4 : 1 und

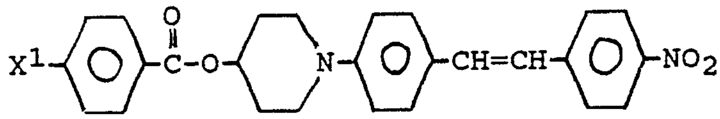

mit einem Seitenketten/Achsverhältnis von 2,5 : 1, wobei $X^1$ beispielsweise eine der Bedeutungen von $(CH_2)_4$-, $(CH_2)_3$-O-, ( $CH_2)_5$-O-und $(CH_2)_6$-O - hat, sowie

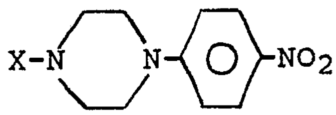

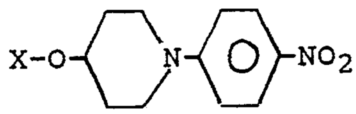

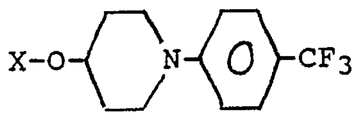

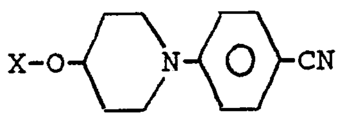

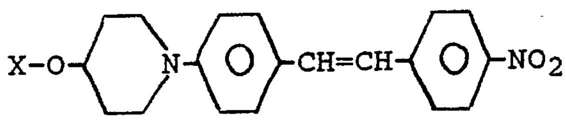

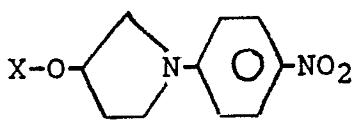

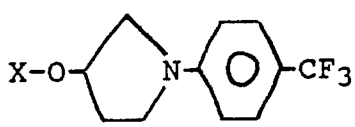

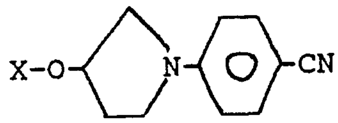

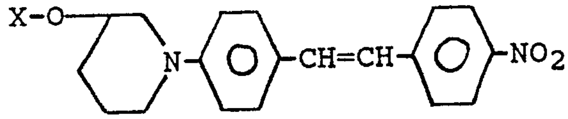

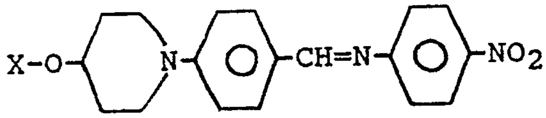

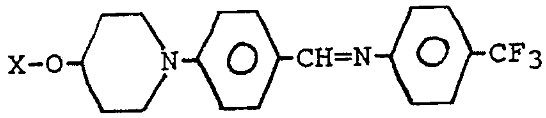

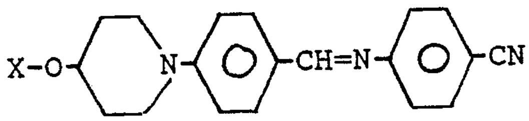

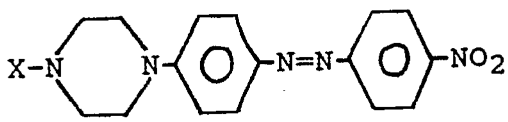

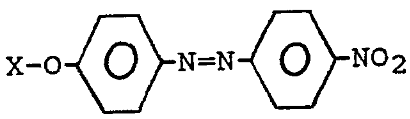

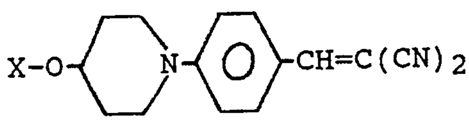

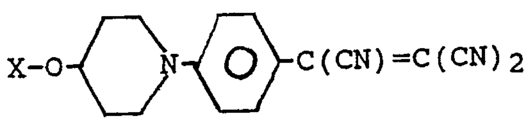

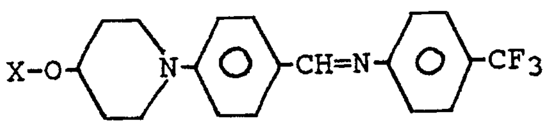

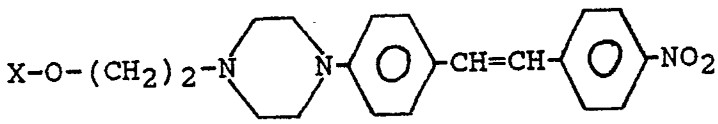

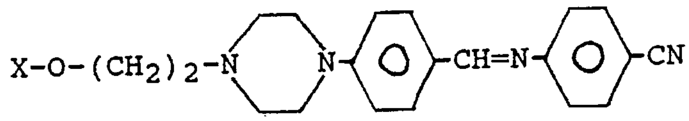

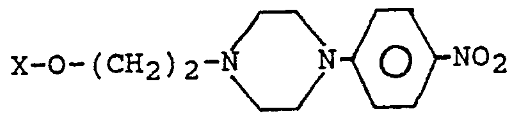

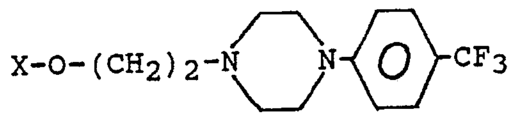

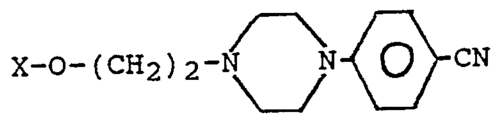

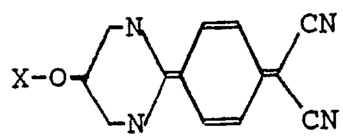

wobei X beispielsweise eine der Bedeutungen von

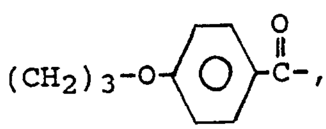, 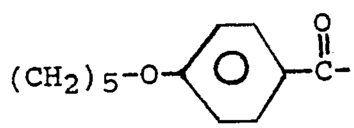, 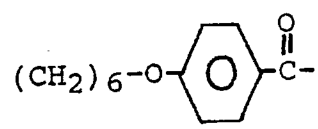,

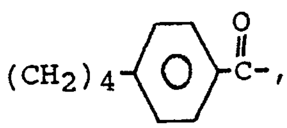, 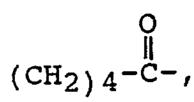, 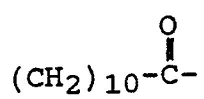 und 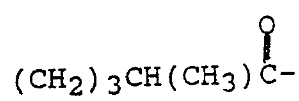

hat.

Bei Rest $R^1$ handelt es sich vorzugsweise um einwertige Kohlenwasserstoffreste mit 1 bis 6 Kohlenstoffatomen, die mit Halogenatomen und Hydroxylgruppen substituiert sein können.

Beispiele für Reste $R^1$ sind der Methyl-, Ethyl-, n-Propyl-, iso-Propyl-, 1-n-Butyl, 2-n-Butyl-, iso-Butyl-, tert.-Butyl-, n-Pentyl-, iso-Pentyl-, neo-Pentyl-, tert.-Pentyl- und der n-Hexylrest, Alkenylreste, wie der Vinyl- und der Allylrest, Cycloalkylreste, wie der Cyclopentyl- und der Cyclohexylrest sowie der Phenylrest.

Beispiele für substituierte Reste $R^1$ sind Cyanalkylreste, wie der $\beta$-Cyanethylrest, und halogenierte Kohlenwasserstoffreste, beispielsweise Halogenalkylreste, wie der 3,3,3-Tri-fluor-n-propylrest, der 2,2,2,2',2',2'-Hexafluorpropylrest, der Heptafluorisopropylrest, und Halogenarylreste, wie der o-, m-, und p-Chlorphenylrest und der o-, m-, und p-Fluorphenylrest.

Besonders bevorzugte Reste $R^1$ sind Methyl-, Ethyl- und Phenylreste, insbesondere der Methylrest.

Bei den mesogenen Resten $R^2$ kann es sich um alle bisher bekannten mesogenen Gruppen handeln. Mesogene Gruppen werden beispielsweise in Dietrich Demus et al., "Flüssige Kristalle in Tabellen", VEB Deutscher Verlag für Grundstoffindustrie, Leipzig, Band I (1974) und Band II (1984) beschrieben, wobei die dort genannten Gruppen zum Inhalt der Offenbarung der hier beschriebenen Erfindung zu rechnen sind.

Beispiele für mesogene Gruppen sind Derivate des Cyclohexans, wie Cyclohexylcarbonsäurecyclohexylester, Cyclohexylcarbonsäurephenylester, Cyclohexylphenylether, Cyclohexylbenzole, Dicyclohexylderivate, Derivate des Stilbens, Zimtsäureester und seine Derivate, Benzoesäurephenylester und seine Derivate, Steroide, wie Cholesterin, dessen Derivate, wie Cholesterinester, Cholestan und dessen Derivate, Benzylidenaniline, Azobenzol und seine Derivate, Azoxybenzol und dessen Derivate, Alkyl- und Alkoxyderivate von Biphenyl und Schiff'sche Basen.

Bevorzugt handelt es sich bei den Resten $R^2$ um Reste der Formeln (II) bis (V), wobei $R^3$, d, e und m die obengenannte Bedeutung haben und Y Cholesterylreste sowie Reste der Formeln

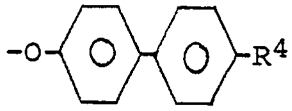

(IX)

und

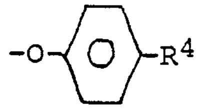

(X)

bedeutet,
worin $R^4$ Wasserstoffatom, Halogenatom, Nitro- und Cyanogruppe sowie achirale und chirale Estergruppen, Alkyl-, Alkoxy-, Aryl-, Aryloxy-, Acyl- und Acyloxygruppen, die gegebenenfalls substituiert sein können, bedeutet.

Beispiele für $R^4$ sind Alkylgruppen mit 1 bis 10 Kohlenstoffatomen, wie der Methyl-, Ethyl-, n-Propyl-, iso-Propyl-, 1-n-Butyl, 2-n-Butyl-, iso- Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Cycloalkylreste, wie Cyclopentyl-, Cyclohexyl-, Cycloheptylreste und Methylcyclohexylreste sowie die entsprechenden Alkoxygruppen.

Beispiele für $R^4$ sind Arylreste, wie der Phenylrest und substituierte Phenylreste, sowie die entsprechenden Aryloxyreste.
Weitere Beispiele für $R^4$ sind

Weitere Beispiele für $R^4$ sind 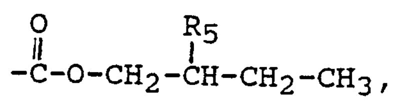,

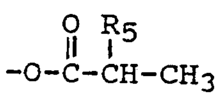 und 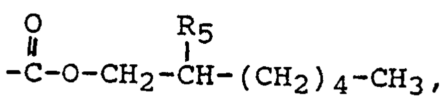,

wobei $R_5$ gleich oder verschieden sein kann und Wasserstoffatom, Chlor- und Fluoratom sowie Hydroxyl-, Cyano- und Methylgruppe bedeutet.

Bevorzugte Reste $R^4$ sind Wasserstoffatom, Cyano- und Nitrogruppe sowie Methyl-, Methoxy-, Ethyl-, Ethoxy-, 2-Methylbutoxy-, 2-Methylheptoxy- und Estergruppen, wobei Wasserstoffatom, Cyano- und Methoxygruppe besonders bevorzugt sind.

Bei den erfindungsgemäßen cyclischen Organosiloxanen kann es sich um monofunktionelle cyclische Organosiloxane wie auch um polyfunktionelle cyclische Organosiloxane handeln.

Bei den monofunktionellen cyclischen Organosiloxanen handelt es sich vorzugsweise um solche aus Einheiten der Formel (I), worin R, $R^1$ und $R^2$ die obengenannte Bedeutung haben und a 0 oder 1, b 1 oder 2 und c 0 ist, mit der Maßgabe, daß die Summe aus a und b gleich zwei ist und das cyclische Organopolysiloxan einen Rest R aufweist.

Die erfindungsgemäßen monofunktionellen cyclischen Organosiloxane weisen besonders bevorzugt 2 bis 8, insbesondere 3 bis 5, Silicium-Ringatome auf.

Beispiele für die erfindungsgemäßen monofunktionellen cyclischen Organosiloxane sind

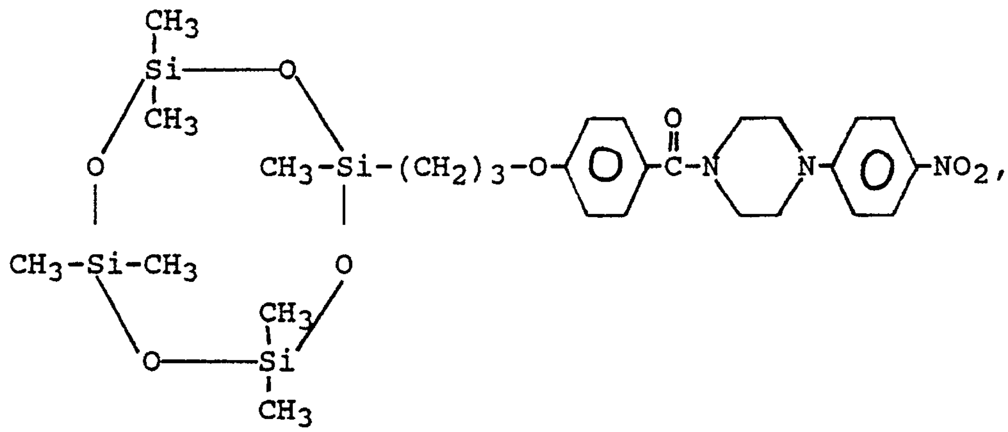

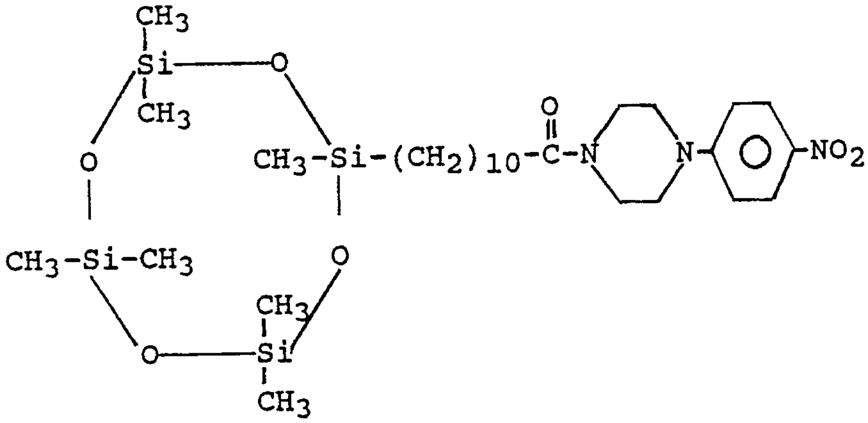
,

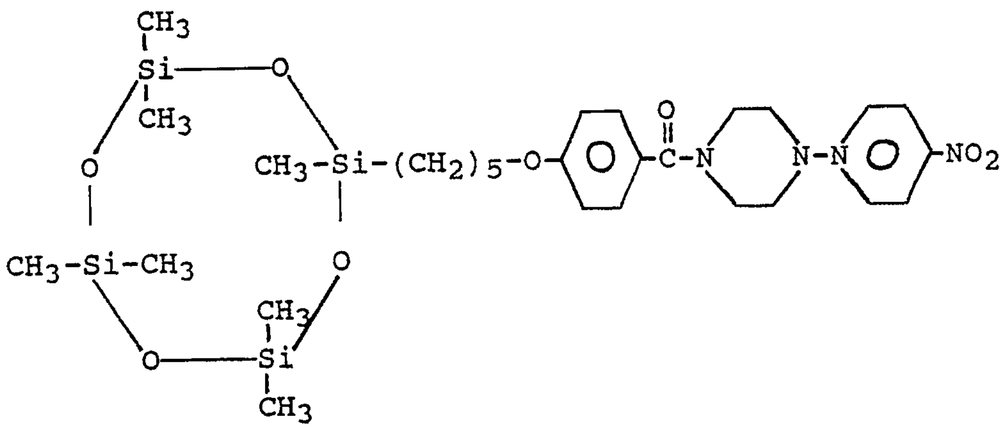
,

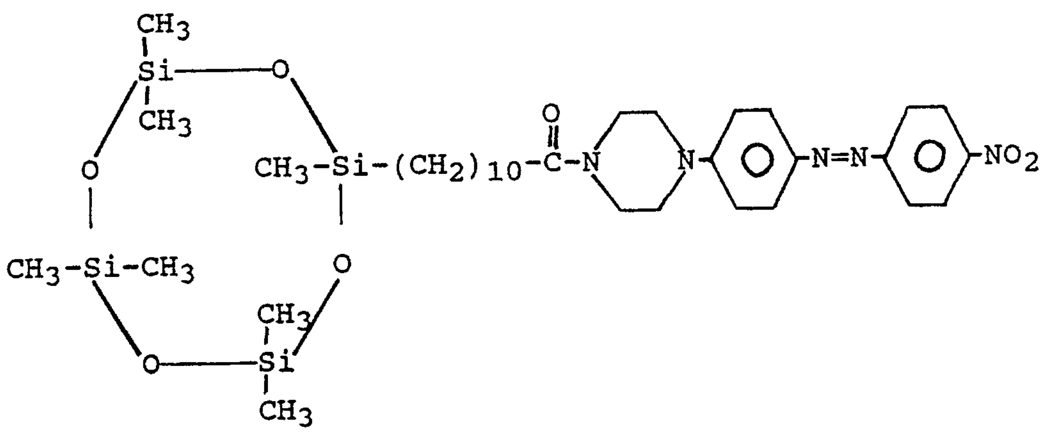

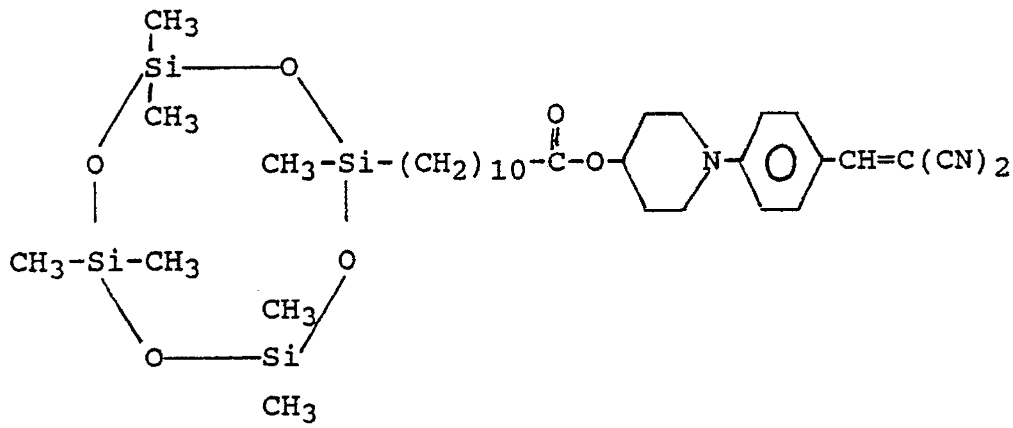

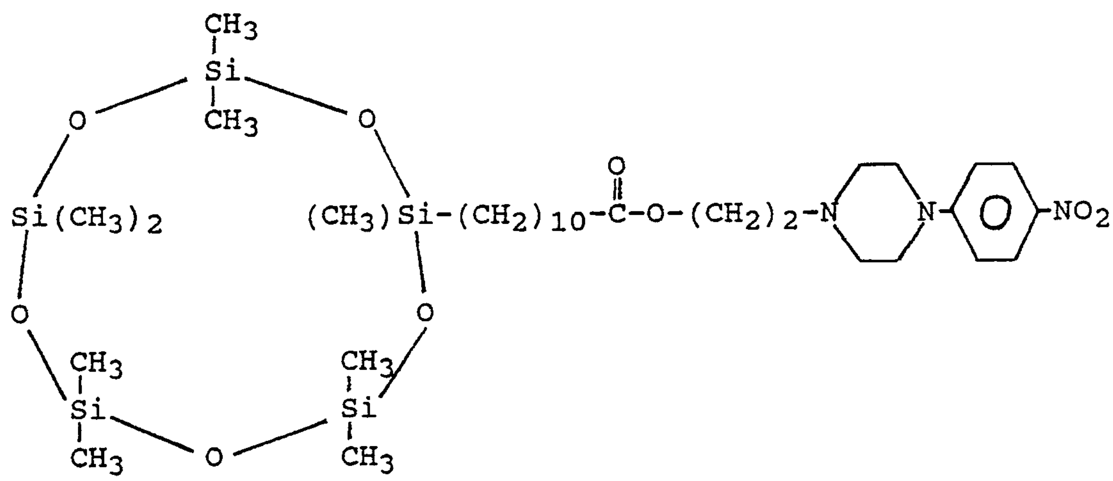

Bei den polyfunktionellen cyclischen Organosiloxanen handelt es sich vorzugsweise um solche aus Einheiten der Formel (I), wobei R, $R^1$, $R^2$, a, b und c die obengenannte Bedeutung haben, mit der Maßgabe, daß die Summe aus a, b und c gleich zwei ist und das cyclische Organosiloxan mindestens einen Rest R sowie mindestens einen weiteren Rest, ausgewählt aus der Gruppe aus R und $R^2$, aufweist, wobei das cyclische Organosiloxan vorzugsweise mesogene Eigenschaften hat.

Die erfindungsgemäßen polyfunktionellen cyclischen Organosiloxane weisen besonders bevorzugt 3 bis 7 Silicium-Ringatome auf.

Beispiele für die erfindungsgemäßen polyfunktionellen Organosiloxane sind

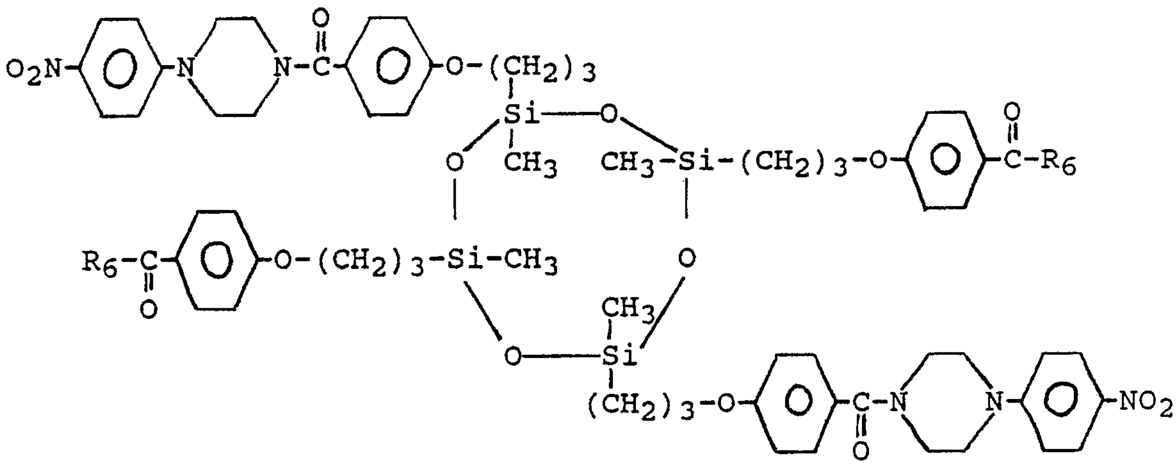

mit $R_6$ gleich Cholesterylrest oder 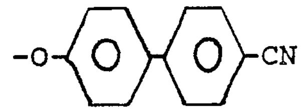 und

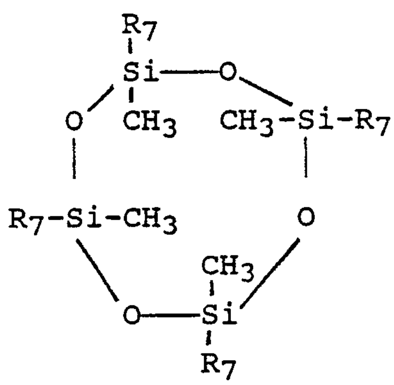

mit $R_7$ gleich 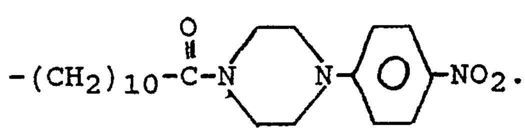.

Die erfindungsgemäßen cyclischen Organosiloxane lassen sich nach an sich bekannten Verfahren herstellen. So können cyclische Organosiloxane aus Einheiten der Formel (I) vorzugsweise dadurch hergestellt werden, daß man cyclische Organosiloxane mit mindestens einem Si-gebundenen Wasserstoffatom, insbesondere solche aus Einheiten der Formel

$$R^1{}_bH_{(a+c)}SiO_{\frac{4-a-b-c}{2}} \qquad (XI)$$

wobei $R^1$, a, b und c eine der oben angegebenen Bedeutungen haben, mit der Maßgabe, daß die Summe aus a, b und c gleich 2 ist,
mit chiralen oder achiralen Verbindungen, die mindestens ein Donor/Acceptor-$\pi$-Elektronensystem, bevorzugt ein Donor/Acceptor-$\pi$-Elektronensystem mit einem Seitenketten/Achsverhältnis zwischen 2:1 und 20:1, aufweisen und eine aliphatische Mehrfachbindung, bevorzugt eine endständige aliphatische Mehrfachbindung, haben, insbesondere solche der Formeln

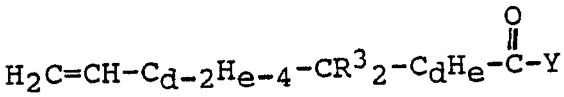

(XII)

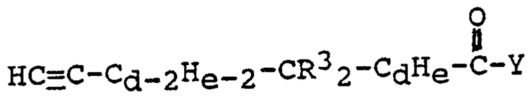

(XIII)

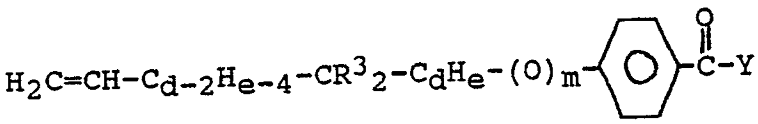

(XIV)

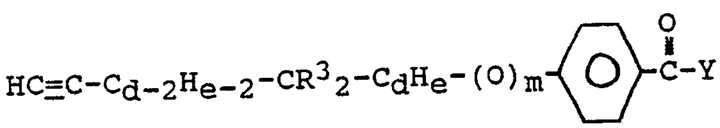

(XV)

$$H_2C{=}CH{-}C_{d-2}H_{e-4}{-}CR^3{}_2{-}C_dH_e{-}(O)_m{-}Y \qquad (XVI)$$

$$HC{\equiv}C{-}C_{d-2}H_{e-2}{-}CR^3{}_2{-}C_dH_e{-}(O)_m{-}Y \qquad (XVII)$$

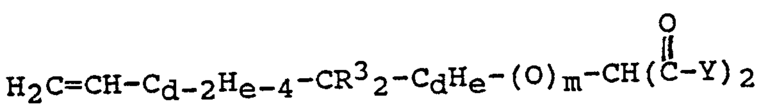

(XVIII)

oder

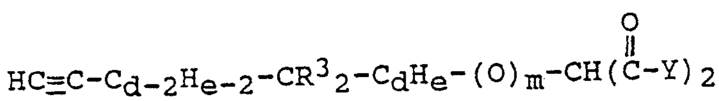

(XIX)

wobei

$R^3$, d, e, m und Y eine der obengenannten Bedeutungen haben,

und gegebenenfalls mit aliphatische Mehrfachbindung, bevorzugt endständige, aliphatische Mehrfachbindung, aufweisenden mesogenen Verbindungen umsetzt.

Bei dem erfindungsgemäßen Verfahren werden als cyclische Organosiloxane mit mindestens einem Si-gebundenen Wasserstoffatom aus Einheiten der Formel (XI) vorzugsweise solche eingesetzt, die 2 bis 10 Silicium-Ringatome aufweisen.

Die bei dem erfindungsgemäßen Verfahren eingesetzten, cyclischen Organosiloxane mit mindestens einem Si-gebundenen Wasserstoffatom sind handelsübliche Produkte bzw. nach in der Siliciumchemie gängigen Methoden herstellbar. Hierzu sei z.B. auf W. Noll, "Chemistry and Technology of Silicones", Academic Press, Orlando, 1968, Seite 190 ff und H. Wick, G. Kreis, F.-H. Kreuzer, "Silicone", in "Ullmanns Encyklopädie der technischen Chemie", Verlag Chemie, Weinheim, 4. Aufl., 1982, Bd.21, Seite 511 ff verwiesen.

Die bei dem erfindungsgemäßen Verfahren eingesetzten, chiralen oder achiralen Verbindungen, die mindestens ein Donor/Acceptor-$\pi$-Elektronensystem aufweisen und eine aliphatische Mehrfachbindung haben, sind handelsübliche Produkte bzw. können nach in der organischen Chemie gängigen Methoden hergestellt werden. Hierzu sei beispielsweise auf E.C. Taylor, J.S. Skotnicki, Synthesis (1981) 606 verwiesen.

Vorzugsweise werden etwa a Äquivalente von Verbindungen der Formeln (XII) bis (XIX) und etwa c Äquivalente von aliphatische Mehrfachbindung aufweisenden mesogenen Verbindungen eingesetzt.

Bei dem erfindungsgemäßen Verfahren kann es sich bei jeder Komponente um eine einzelne Art dieser Komponente wie auch um ein Gemisch aus mindestens zwei verschiedenen Arten dieser Komponente handeln.

Bei dem erfindungsgemäßen Verfahren kann bzw. können Verbindung(en) aus Einheiten der Formel (XI) zuerst mit Verbindung(en) der Formeln (XII) bis (XIX) und dann mit einer oder mehreren aliphatische Mehrfachbindung aufweisenden mesogenen Verbindungen(en) oder umgekehrt umgesetzt werden. Vorzugsweise werden alle Komponenten in einem Schritt miteinander umgesetzt.

Die genannten Umsetzungen werden vorteilhafterweise in Gegenwart eines Katalysators durchgeführt.

Die eingesetzten Katalysatoren können im Rahmen des erfindungsgemäßen Verfahrens die gleichen sein, die auch bisher zum Anlagern von Si-gebundenen Wasserstoffatomen an aliphatische Mehrfachbindungen eingesetzt wurden. Es handelt sich dabei hauptsächlich um Metalle der 8. Nebengruppe und um deren anorganische und organische Verbindungen, wobei Platin und dessen Verbindungen bevorzugt werden.

Beispiele für solche Katalysatoren sind auf einem inerten Träger, wie Aktivkohle, $SiO_2$oder $Al_2O_3$, abgeschiedenes, feinverteiltes elementares Platin gemäß US-PS 2,970,150 (D.L. Bailey, Union Carbide Corporation; ausgegeben am 31. Januar 1961), Hexachloroplatinsäure gemäß US-PS 2,823,218 (J.L. Speier, Dow Corning Corporation; ausgegeben am 11. Februar 1958) und davon abgeleitete Chloroplatinate, Platinkomplexe des Typs L`$PtCl_2$, wobei L ein lineares oder cyclisches Monoolefin, wie Ethen, Propen und Cyclohexen, bedeutet, gemäß US-PS 3,159,601 und US-PS 3,159,662 (Bruce A. Ashby, General Electric Company; jeweils ausgegeben am 1. Dezember 1964), Platinkomplexe des Typs L`$PtCl_2$, wobei L ein cyclisches Diolefin, wie 1,5-Cyclooctadien, Norbornadien und Cyclopentadien, bedeutet, gemäß JP-OS 79/76,529 und JP-OS 79/76,530 (Masatoshi Arai, Shin-Etsu Chemical Industry Co., Ltd.; jeweils ausgegeben am 19. Juni 1979) und US-PS 4,276,252 (G. Kreis, Wacker-Chemie GmbH, ausgegeben am 30. Juni 1981) oder ein cyclisches Polyolefin bedeutet gemäß der deutschen Anmeldung mit dem Aktenzeichen P 39 06 514.6 (G. Wenski, Consortium für elektrochemische Industrie GmbH; angemeldet am 1. März 1989), Platinvinylsiloxankomplexe gemäß US-PS 3,814,730 (B.D. Karstedt, General Electric Company; ausgegeben am 4. Juni 1974) und Acetylacetonatkomplexe des Platins gemäß US-PS 4,177,341 (G. Kreis, Consortium für elektrochemische Industrie GmbH; ausgegeben am 4. Dezember 1979).

Bei dem erfindungsgemäßen Verfahren werden wegen deren hohen Wirksamkeit besonders bevorzugt Platinkomplexe des Typs L`$PtCl_2$, wobei L ein cyclisches Di- oder Polyolefin bedeutet, insbesondere Dicyclopentadien-Platindichlorid, eingesetzt.

Bei dem erfindungsgemäß eingesetzten Katalysator kann es sich um eine einzelne Art von Katalysator wie auch um ein Gemisch aus mindestens zwei verschiedenen Arten derartiger Katalysatoren handeln.

Die im Rahmen des erfindungsgemäßen Verfahrens eingesetzten Mengen an Katalysator können die gleichen sein wie bei den bisher bekannten Verfahren zum Anlagern von Si-gebundenem Wasserstoff an aliphatische Mehrfachbindung in Gegenwart von Katalysator. Es sind dies vorzugsweise 0,1 bis 1000 Gewichts-ppm, besonders bevorzugt 2 bis 400 Gewichts-ppm, jeweils berechnet als elementares Platin, bezogen auf das Gesamtgewicht der Reaktionsmasse.

Das erfindungsgemäße Verfahren kann in Anwesenheit oder in Abwesenheit von Lösungsmittel durchgeführt werden, wobei die Verwendung von in bezug auf die Reaktionsmasse inertem organischen Lösungsmittel bevorzugt wird.

Beispiele für Lösungsmittel sind Alkohole, wie Methanol, Ethanol, n-Propanol, iso-Propanol, n-, sec.- und tert.-Butanol und 2-Butanol; Ester, wie Methylacetat, Ethylacetat, n- und iso-Propylacetat, n-, sec.- und tert.-Butylacetat, Ethylformiat und Diethylcarbonat; Ether, wie Dioxan, Tetrahydrofuran, Diethylether, Di-n-propylether, Diisopropylether, Di-n-butylether und Anisol; chlorierte Kohlenwasserstoffe, wie Dichlormethan, Trichlormethan, Tetrachlormethan, 1,2-Dichlorethan, 1,1,1-Trichlorethan, Trichlorethylen, Tetrachlorethylen und Chlorbenzol; Kohlenwasserstoffe, wie Pentan, n-Hexan, Hexan-Isomerengemische, Cyclohexan, Heptan, Octan, Waschbenzin, Petrolether, Benzol, Ethylbenzol, Toluol, Xylole und Ketone, wie Aceton, Methylethylketon, Methylisobutylketon, oder Gemische dieser Lösungsmittel, wobei Toluol, Dichlormethan und Tetrahydrofuran besonders bevorzugt eingesetzt werden.

Die Bezeichnung Lösungsmittel bedeutet nicht, daß sich alle Reaktionskomponenten in diesen lösen müssen. Die Reaktion kann auch in einer Suspension oder Emulsion eines oder mehrerer Reaktionspartner durchgeführt werden.

Die im Rahmen des erfindungsgemäßen Verfahrens angewandten Temperaturen und Drücke können die gleichen sein wie bei den bisher bekannten Verfahren zum Anlagern von Si-gebundenem Wasserstoff an aliphatische Mehrfachbindung in Gegenwart von Katalysator. Es sind dies vorzugsweise Temperaturen zwischen 0 und 200 °C und Drücke zwischen 900 und 1100 hPa, wobei Temperaturen zwischen 20 und

120 °C besonders bevorzugt sind. Falls erwünscht, können auch höhere oder niedrigere Drücke angewendet werden.

Selbstverständlich kann bei dem erfindungsgemäßen Verfahren die Reaktionsmasse außer cyclischem Organosiloxan mit mindestens einem Wasserstoffatom, chiraler oder achiraler Verbindung, die mindestens ein Donor/Acceptor-$\pi$-Elektronensystem aufweist und eine endständige aliphatische Mehrfachbindung hat, gegebenenfalls endständige aliphatische Mehrfachbindung aufweisender mesogener Verbindung, Katalysator und gegebenenfalls Lösungsmittel noch weitere Stoffe enthalten.

Die Reaktionszeit hängt unter anderem von der Reaktionstemperatur, der Aktivität und der Menge des verwendeten Katalysators ab. Sie liegt im allgemeinen zwischen 20 Minuten und 24 Stunden.

Die erfindungsgemäßen cyclischen Organosiloxane mit nichtlinearen optischen Eigenschaften, insbesondere die cyclischen Organosiloxane mit sowohl nichtlinearen optischen Eigenschaften als auch flüssigkristallinen Eigenschaften haben den Vorteil, daß sie transparente Filme bilden, die sich bereits durch mechanische Behandlung sehr leicht orientieren lassen. Dieser orientierte Zustand läßt sich durch Abschrecken unterhalb des Glaspunktes einfrieren und ergibt einen klaren Film. Selbstverständlich lassen sie sich auch durch gängige Methoden wie durch Oberflächeneffekte, elektrische bzw. magnetische Felder ausrichten.

Des weiteren zeigen die erfindungsgemäßen cyclischen Organosiloxane sowohl eine hohe mechanische als auch eine hohe thermooxidative Stabilität.

Darüberhinaus besitzen die erfindungsgemäßen cyclischen Organosiloxane aufgrund ihres definierten, gegenüber hochmolekularen Polymeren relativ geringen Molekulargewichts eine vergleichsweise geringe Viskosität sowie eine gute Löslichkeit in gängigen Lösungsmitteln, wie Tetrahydrofuran, was für ihre Verarbeitbarkeit von Vorteil ist. Daraus ergibt sich auch die Möglichkeit, die erfindungsgemäßen cyclischen Organosiloxane auf relativ einfache Weise, dem jeweiligen Anwendungszweck entsprechend, mit anderen, insbesondere strukturell ähnlichen Komponenten zu mischen, wobei die Konzentration der erfindungsgemäßen cyclischen Organosiloxane in einem weiten Bereich variiert werden kann.

Das erfindungsgemäße Verfahren hat den Vorteil, daß die Eigenschaften der erfindungsgemäß hergestellten cyclischen Organosiloxane auf relativ einfache Weise, ganz gezielt, den gestellten Anforderungen entsprechend eingestellt werden können. So können beispielsweise cyclische Organosiloxane mit nichtlinearen optischen Eigenschaften sowie mit nichtlinearen optischen Eigenschaften in Kombination mit smektisch nematisch oder cholesterisch flüssigkristallinen Eigenschaften hergestellt werden.

Die erfindungsgemäßen cyclischen Organosiloxane können für alle Zwecke verwendet werden, für die auch bisher Verbindungen mit nichtlinearen optischen Eigenschaften bzw. mit nichtlinearen optischen Eigenschaften in Kombination mit flüssigkristallinen Eigenschaften eingesetzt werden. So können sie beispielsweise in der Mikroelektronik, der Datenübertragung bzw. Kommunikationstechnik, in der Computertechnik, in Displays, optischen Schaltern, optischen Informationsspeichern und integrierten Schaltkreisen sowie für medizinische Einsatzzwecke Anwendung finden.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 23 °C, bzw. bei einer Temperatur, die sich beim Zusammengeben der Reaktanden bei Raumtemperatur ohne zusätzliche Heizung oder Kühlung einstellt, durchgeführt.

Die Glastemperaturen und der Klärpunkt der erfindungsgemäßen cyclischen Organosiloxane werden jeweils durch Differentialthermoanalyse (DTA) bestimmt. Der Reinheitsgrad wird durch Gel-Permeations-Chromatographie (GPC) ermittelt.

Beispiel 1

Zu einer Lösung von 3,0 g 1-(4(2-Allyloxy)benzoyl)-4-(4-nitrophenyl)piperazin der Strukturformel

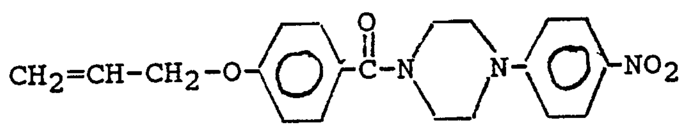

und 2,5 g Heptamethylhydrogencyclotetrasiloxan in 15 ml wasserfreiem Toluol werden 0,1 ml einer 1 prozentigen Lösung von Dicyclopentadienplatindichlorid in Dichlormethan, welche nach literaturbekannten

Verfahren, wie beispielsweise J. Chatt, L.M. Vallarino, L.M. Venanzi, J. Chem. Soc. (London) (1957) 2496-505 und H.C. Clark, L.E. Manzer, J. Organometal. Chem. 59 (1973) 411-28, hergestellt wird, zugegeben und das so erhaltene Gemisch 3 Stunden unter Rückfluß zum Sieden erhitzt. Zur Abtrennung der platinhaltigen, feinen Niederschläge wird über eine kurze, mit Kieselgel gefüllte Säule abfiltriert. Anschließend werden die Lösungsmittel bei vermindertem Druck abdestilliert und der Rückstand in Tetrahydrofuran aufgenommen. Durch Zugabe von Ethanol wird das Reaktionsprodukt ausgefällt, abfiltriert und bei vermindertem Druck und einer Temperatur von 60 °C getrocknet. Es werden 4,4 g eines gelblichen Feststoffs erhalten, der gemäß GPC einen Reinheitsgrad von 95,1 % aufweist. Diese Substanz wird auf einen Objektträger aufgebracht, über den Schmelzpunkt erwärmt, die Schmelze wieder abgekühlt und knapp unterhalb des Schmelzpunktes nach Aufbringen eines Deckplättchens durch leichten Druck und mechanisches Scheren orientiert. Die Substanz bildet bei Raumtemperatur einen transparenten Film mit einer smektisch C-Phase, die bei einer Temperatur von 44,8 °C klärt. Der Glaspunkt liegt bei 10 °C.

Beispiel 2

Zu einer Lösung von 1,0 g 1-(4-(2-Allyloxy)benzoyl)-4-(4-nitrophenyl)piperazin der Strukturformel

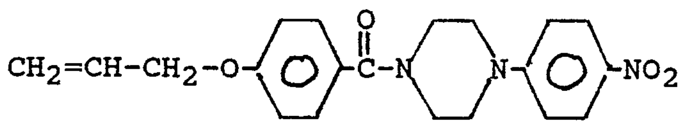

,

1,5 g 4-Allyloxybenzoesäure-cholesterylester und 0,5 g Pentamethylpentahydrogencyclopentasiloxan in 7,5 ml wasserfreiem Toluol werden 0,05 ml der in Beispiel 1 beschriebenen 1 prozentigen Dicyclopentadienplatindichlorid-Lösung zugegeben. Mit dem so erhaltenen Gemisch wird wie in Beispiel 1 beschrieben verfahren, mit der Abänderung, daß zweimal mit Tetrahydrofuran und Ethanol umgefällt wird. Es werden 0,4 g eines roten Feststoffs erhalten, der gemäß GPC eines roten Feststoffs erhalten, der gemäß GPC einen Reinheitsgrad von 96,4 % aufweist. Diese Substanz bildet bei Raumtemperatur nach der in Beispiel 1 beschriebenen Präparation einen transparenten Film mit einer smektisch C-Phase, bei einer Temperatur zwischen 184 und 188 °C in eine smektisch A-Phase übergeht und zwischen 204 und 238 °C klärt. Der Glaspunkt liegt bei 41 °C.

Beispiel 3

Zu einer Lösung von 2,0 g 1-(Dec-9-enylcarbonyl)-4-(4-nitrophenyl)piperazin der Strukturformel

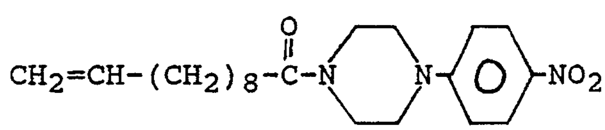

,

1,3 g Heptamethylhydrogencyclotetrasiloxan in 9 ml wasserfreiem Toluol werden 0,06 ml der in Beispiel 1 beschriebenen 1 prozentigen Dicyclopentadienplatindichlorid-Lösung zugegeben. Mit dem so erhaltenen Gemisch wird wie in Beispiel 1 beschrieben verfahren. Es werden 2,0 g eines zähfließenden, gelben Öls erhalten, das gemäß GPC einen Reinheitsgrad von 100 % aufweist. Diese Substanz bildet bei Raumtemperatur nach der in Beispiel 1 beschriebenen Präparation einen transparenten, gelben Film mit einer smektisch A-Phase, die bei einer Temperatur zwischen 57 und 58 °C klärt. Der Glaspunkt liegt bei 0 °C.

Beispiel 4

Zu einer Lösung von 1,5 g N-(N'-(Dec-9-enylcarbonyl)piperazinyl)-4-(4'-nitro)azobenzol der Strukturformel

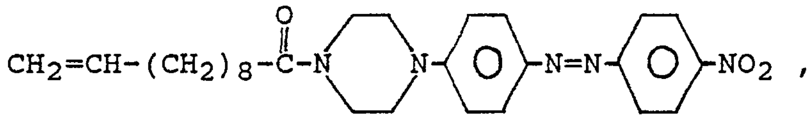

1,0 g Heptamethylhydrogencyclotetrasiloxan in 8 ml wasserfreiem Toluol werden 0,05 ml der in Beispiel 1 beschriebenen 1 prozentigen Dicyclopentadienplatindichlorid-Lösung zugegeben. Mit dem so erhaltenen Gemisch wird wie in Beispiel 1 beschrieben verfahren. Es werden 1,0 g eines dunkelroten Feststoffs erhalten, der gemäß GPC einen Reinheitsgrad von 100 % aufweist. Diese Substanz bildet bei Raumtemperatur nach der in Beispiel 1 beschriebenen Präparation einen klaren Film, der bis zum Klärpunkt bei 179° C mehrere verschiedene smektische Phasen zeigt.

Beispiel 5

Zu einer Lösung von 1,5 g 1-(4-(Pent-4-enyloxy)benzoyl)-4-(4-nitrophenyl)piperazin der Strukturformel

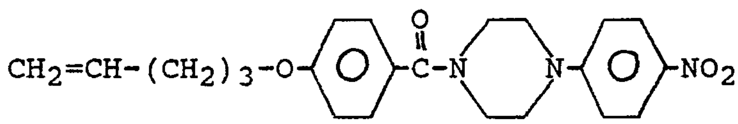

und 1,2 g Heptamethylhydrogencyclotetrasiloxan in 7 ml wasserfreiem Toluol werden 0,05 ml der in Beispiel 1 beschriebenen 1 prozentigen Dicyclopentadienplatindichlorid-Lösung zugegeben. Mit dem so erhaltenen Gemisch wird wie in Beispiel 1 beschrieben verfahren. Es werden 1,7 g eines gelben Feststoffs erhalten, der gemäß GPC einen Reinheitsgrad von 100 % aufweist. Die Substanz bildet bei Raumtemperatur nach der in Beispiel 1 beschriebenen Präparation einen transparenten, gelben Film mit einer smektisch C-Phase, die bei einer Temperatur von 36° C in eine smektisch A-Phase übergeht und zwischen 79 und 115° C klärt. Der Glaspunkt liegt bei 5° C.

Beispiel 6

Zu einer Lösung von 1,5 g 1-(2,2-Dicyanovinyl)phenyl)-4-(Dec-9-enylcarbonyloxy)piperidin der Strukturformel

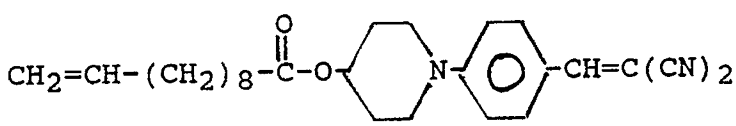

1,1 g Heptamethylhydrogencyclotetrasiloxan in 7 ml wasserfreiem Toluol werden 0,05 ml der in Beispiel 1 beschriebenen 1 prozentigen Dicyclopentadienplatindichlorid-Lösung zugegeben. Mit dem so erhaltenen Gemisch wird wie in Beispiel 1 beschrieben verfahren. Es werden 2,2 g eines gelben Feststoffs erhalten, der gemäß GPC einen Reinheitsgrad von 97,4 % aufweist. Diese Substanz bildet bei Raumtemperatur nach der in Beispiel 1 beschriebenen Präparation einen transparenten, gelben Film, der zur Kristallisation neigt, mit einer smektisch A-Phase, die bei einer Temperatur von 50 ° C klärt.

Beispiel 7

Zu einer Lösung von 2,0 g 1(Dec-9-enylcarbonyl)-4(4-nitrophenyl)piperazin der Strukturformel

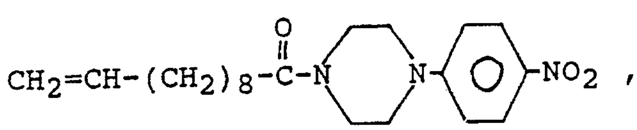

0,26 g Tetramethyltetrahydrogencyclotetrasiloxan in 6 ml wasserfreiem Toluol werden 0,04 ml der in Beispiel 1 beschriebenen 1 prozentigen Dicyclopentadienplatindichlorid-Lösung zugegeben. Mit dem so erhaltenen Gemisch wird wie in Beispiel 1 beschrieben verfahren. Es werden 1,2 g eines gelben Feststoffs erhalten, der gemäß GPC einen Reinheitsgrad von 99,8 % aufweist. Diese Substanz bildet bei Raumtemperatur nach der in Beispiel 1 beschriebenen Präparation einen transparenten, gelben Film mit einer smektisch A-Phase, die bei einer Temperatur zwischen 97,5 und 99,8 °C klärt. Der Glaspunkt liegt bei 27 °C.

## Ansprüche

1. Cyclische Organosiloxane, dadurch gekennzeichnet, daß sie mindestens einen Si-gebundenen organischen Rest aufweisen, der mindestens ein Donor/Acceptor-$\pi$-Elektronensystem beinhaltet.

2. Cyclische Organosiloxane nach Anspruch 1, dadurch gekennzeichnet, daß sie aus Einheiten der allgemeinen Formel

$$R_aR^1_bR^2_cSiO_{\frac{4-a-b-c}{2}} \qquad (I)$$

aufgebaut sind, wobei

R gleich oder verschieden sein kann und einen chiralen oder achiralen, einwertigen organischen Rest, der mindestens ein Donor/Acceptor-$\pi$-Elektronensystem aufweist, bedeutet,

$R^1$ gleiche oder verschiedene, einwertige, gegebenenfalls substituierte Kohlenwasserstoffreste bedeutet,

$R^2$ gleich oder verschieden sein kann und einen mesogenen Rest bedeutet,

a 0,1 oder 2,

b 0,1 oder 2 und

c 0,1 oder 2 ist,

mit der Maßgabe, daß die Summe aus a, b und c gleich zwei ist und das cyclische Organosiloxan mindestens einen Rest R aufweist.

3. Cyclische Organosiloxane nach Anspruch 1 oder 2, dadurch gekennzeichnet, daß sie 2 bis 10 Silicium-Ringatome aufweisen.

4. Cyclische Organosiloxane nach einem oder mehreren der Ansprüche 1 bis 3, dadurch gekennzeichnet, daß R einen Rest der Formel

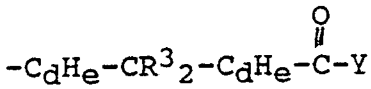

(II)

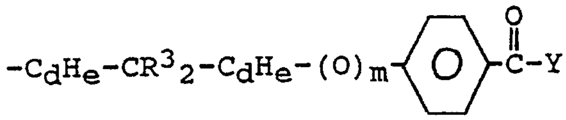

(III)

$$-C_dH_e-CR^3{}_2-C_dH_e-(O)_m-Y \qquad (IV)$$

oder

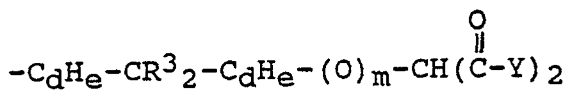

(V)

darstellt, wobei

- $R^3$ gleich oder verschieden sein kann und Wasserstoffatom, Cyanogruppe, Hydroxylgruppe, Halogenatom und Alkylgruppe mit 1 bis 4 Kohlenstoffatomen bedeutet,
- d jeweils gleiche oder verschiedene ganze Zahlen zwischen 0 und 12 bedeutet,
- e jeweils gleiche oder verschiedene ganze Zahlen zwischen 0 und 24 bedeutet,
- m 0 oder 1 ist und
- Y einen ein Donor/Acceptor-$\pi$-Elektronensystem enthaltenden, chiralen oder achiralen Rest bedeutet.

**5.** Cyclische Organosiloxane nach einem oder mehreren der Ansprüche 1 bis 4, dadurch gekennzeichnet, daß Rest Y ein Seitenketten/Achsverhältnis zwischen 2:1 und 20:1 aufweist, mit der Maßgabe, daß bei R gleich Rest gemäß Formel (III) die Phenylengruppe und bei R gleich Rest gemäß Formel (II) und (V) die CO-Gruppe mit in die Bestimmung des Seitenketten/Achsverhältnisses einbezogen wird.

**6.** Cyclische Organosiloxane nach einem oder mehreren der Ansprüche 1 bis 5, dadurch gekennzeichnet, daß Y die Bedeutung von Nitroanilinresten, Nitrostilbenresten und unsubstituierten sowie substituierten Resten der Formeln

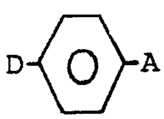

(VI)

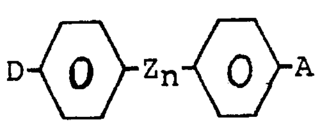

(VII)

und

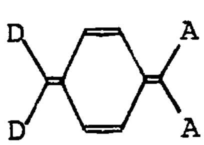

(VIII)

hat, in denen

A gleich oder verschieden sein kann und elektronenziehender Rest bedeutet,
D gleich oder verschieden sein kann und elektronenschiebender Rest bedeutet,
Z ein konjugiertes Mehrfachbindungssystem bedeutet und
n eine ganze Zahl zwischen 0 und 8 ist,

mit der Maßgabe, daß in den Resten Y der allgemeinen Formeln (VI) bis (VIII) ein Wasserstoffatom durch eine chemische Bindung ersetzt ist.

**7.** Verfahren zur Herstellung cyclischer Organosiloxane nach einem oder mehreren der Ansprüche 1 bis 6, dadurch gekennzeichnet, daß cyclisches Organosiloxan mit mindestens einem Si-gebundenen Wasserstoffatom mit chiraler oder achiraler Verbindung, die mindestens ein Donor/Acceptor-$\pi$-Elektronensystem aufweist und eine aliphatische Mehrfachbindung hat, und gegebenenfalls mit aliphatische Mehrfachbindung aufweisender mesogener Verbindung umgesetzt wird.

**8.** Verfahren nach Anspruch 7, dadurch gekennzeichnet, daß als cyclisches Organosiloxan mit mindestens einem Si-gebundenen Wasserstoffatom solche aus Einheiten der Formel

$$R^1{}_bH_{(a+c)}SiO_{\frac{4-a-b-c}{2}} \qquad (XI)$$

eingesetzt werden, wobei
$R^1$, a, b und c die in Anspruch 2 angegebene Bedeutung haben,
mit der Maßgabe, daß die Summe aus a, b und c gleich 2 ist.

**9.** Verfahren nach Anspruch 7 oder 8, dadurch gekennzeichnet, daß als chirale oder achirale Verbindung, die mindestens ein Donor/Acceptor-$\pi$-Elektronensystem aufweist und eine aliphatische Mehrfachbindung hat, solche der Formeln

$$H_2C{=}CH{-}C_{d-2}H_{e-4}{-}CR^3{}_2{-}C_dH_e{-}\overset{\overset{O}{\|}}{C}{-}Y \qquad (XII)$$

$$HC{\equiv}C{-}C_{d-2}H_{e-2}{-}CR^3{}_2{-}C_dH_e{-}\overset{\overset{O}{\|}}{C}{-}Y \qquad (XIII)$$

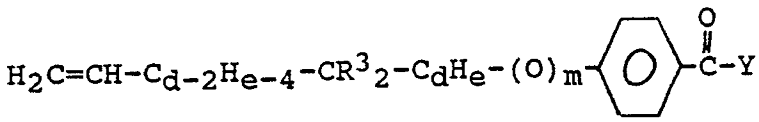 (XIV)

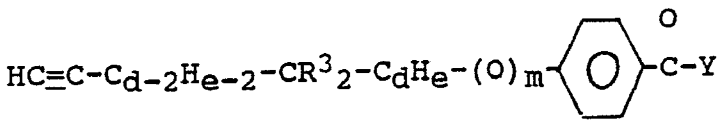 (XV)

$$H_2C{=}CH{-}C_{d-2}H_{e-4}{-}CR^3{}_2{-}C_dH_e{-}(O)_m{-}Y \qquad (XVI)$$

$$HC{\equiv}C{-}C_{d-2}H_{e-2}{-}CR^3{}_2{-}C_dH_e{-}(O)_m{-}Y \qquad (XVII)$$

$$H_2C{=}CH{-}C_{d-2}H_{e-4}{-}CR^3{}_2{-}C_dH_e{-}(O)_m{-}CH(\overset{\overset{O}{\|}}{C}{-}Y)_2 \qquad (XVIII)$$

oder

$$HC{\equiv}C{-}C_{d-2}H_{e-2}{-}CR^3{}_2{-}C_dH_e{-}(O)_m{-}CH(\overset{\overset{O}{\|}}{C}{-}Y)_2 \qquad (XIX)$$

eingesetzt werden, wobei
$R^3$, d, e, m und Y die in Anspruch 3 angegebene Bedeutung haben.

**10.** Nichtlineare optische Eigenschaften aufweisende Zusammensetzung enthaltend cyclisches Organosiloxan gemäß einem oder mehreren der Ansprüche 1 bis 6 oder herstellbar nach einem oder mehreren der Ansprüche 7 bis 9.